# DEMANDE DE BREVET EUROPEEN

(11) **EP 0 866 463 A2**
(43) Date de publication de la demande: **23.09.1998**
(21) Numéro de dépôt: 98104645.1
(22) Date de dépôt: 14.03.1998
(51) Int. Cl.: G11B 33/04, G11B 23/00

(54) **Support pour disque d'enregistrement mince à trou central**

(30) Priorité: 21.03.1997 CH 692/97
(71) Demandeur: CD Plant Tecval S.A., 1337 Vallorbe (CH)
(72) Inventeur: Tricart, Philippe, 1337 Vallorbe (CH)
(74) Mandataire: Hranitzky, Wilhelm Max

(57) **Abrégé**

Le présent support comporte une partie essentiellement plane (1), sur laquelle est agencée une partie de fixation (2) ayant une paroi essentiellement cylindrique dont le bord libre est déformable élastiquement dans le sens radial et présente des bossages (3, 3') orientés radialement vers l'extérieur de la paroi, ces bossages étant agencés de façon à maintenir le disque sur la partie de support de manière amovible, dans le sens axial, lorsque la partie de fixation, après avoir traversé le trou central du disque en subissant une déformation, a pratiquement repris sa forme originale.

## Description

La présente invention concerne un support pour disque d'enregistrement mince à trou central comportant, sur une partie de support essentiellement plane, une partie de fixation agencée de façon à pouvoir traverser le trou central du disque et à assurer le maintien du disque sur le support.

Les supports connus permettant la fixation du disque par le trou central comportent en général des pattes radiales élastiques, obtenues par moulage, les bouts de ces pattes étant épaissis radialement de façon à retenir le disque dans le sens axial. Ces supports présentent notamment l'inconvénient que les défauts de moulage par manque de matière ou par usure du moule créent en particulier des bavures coupantes au bout de ces pattes, à l'endroit où l'utilisateur pose son doigt pour prendre appui lorsqu'il prélève le disque. Outre le désagrément qui en résulte, les défauts de moulage résultant de la forme de ces éléments de fixation conduisent également à des défauts fonctionnels et à un certain taux de rejet à la sortie du moule, sans parler du coût de ces moules relativement complexes.

La présente invention a notamment pour but de remédier à ces inconvénients et de fournir un support de disque qui puisse être fabriqué par moulage d'une manière économique et sans problèmes, en particulier sans le risque que la partie de fixation présente des portions coupantes ou n'assure pas une fixation satisfaisante.

A cet effet, le support selon l'invention est caractérisé en ce que ladite partie de fixation a une forme annulaire d'un diamètre extérieur sensiblement égal ou légèrement inférieur à celui du trou central du disque, cette partie annulaire ayant une paroi essentiellement cylindrique dont au moins un bord libre est déformable élastiquement dans le sens radial, et présente au moins un bossage orienté radialement vers l'extérieur de la paroi, ce bossage étant agencé de façon à maintenir le disque sur la partie de support de manière amovible, dans le sens axial, lorsque la partie de fixation, après avoir traversé le trou central du disque en subissant une déformation, a pratiquement repris sa forme originale.

La partie de fixation peut comporter deux, trois ou quatre bossages répartis sur le pourtour de son bord libre. De préférence, la paroi de la partie de fixation est reliée à la partie de support le long de portions limitées de son pourtour, de façon à laisser cette paroi libre au voisinage d'un bossage.

Selon une forme d'exécution particulière, la paroi de la partie de fixation s étend axialement de part et d'autre de la partie de support de manière à permettre la fixation de deux disques, à savoir un disque de chaque côté de la partie de support.

La partie de support présente de préférence une partie surélevée entourant la partie de fixation et formant un appui pour le disque lorsque celui-ci est mis en place sur la partie de support.

D'autres particularités, buts et avantages de l'invention ressortiront de la description d' exemples de réalisation donnée ci-après avec référence aux dessins annexés dans lesquels
la Fig. 1 est une vue de dessus d'un support pour disque selon l'invention;
la Fig. 2 est une vue en coupe selon la ligne II-II de la Fig. 1;
la Fig. 3 est une vue en coupe, similaire à celle de la Fig. 2, d'une variante de réalisation du support;
la Fig. 4 est une vue de dessus, partielle, d'une autre forme de réalisation du support pour disque selon l'invention;
la Fig. 5 est une vue en coupe selon la ligne V-V de la Fig. 4;
la Fig. 6 est une vue de dessus, partielle, d'encore une autre forme de réalisation du support pour disque selon l'invention; et
la Fig. 7 est une vue en coupe selon la ligne VII-VII de la Fig. 6.

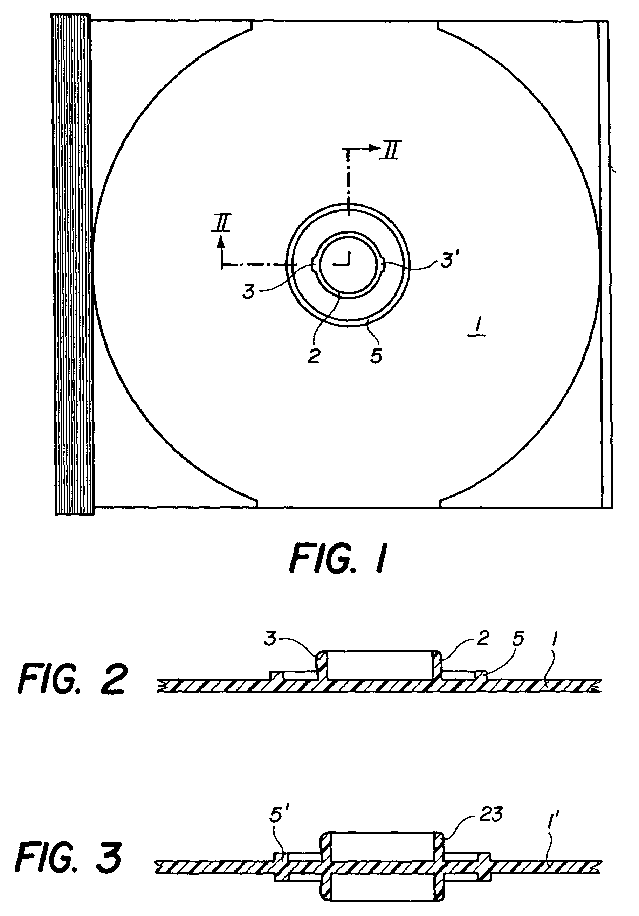

Dans la vue de dessus de la Fig. 1, un support pour un disque d'enregistrement mince à trou central, tel qu'un disque à lecture optique couramment appelé "disque compact" ou "CD", a été représenté schématiquement et la partie de support proprement dite, essentiellement plane, est désignée par la référence 1. La partie de support 1 comporte une partie de fixation 2 visible en coupe selon la ligne II-II à la Fig. 2. Cette partie de fixation 2 a une forme annulaire avec une paroi essentiellement cylindrique, dont la base est solidaire de la partie de support 1 et dont le bord libre présente deux bossages 3 et 3' orientés radialement vers l'extérieur. La paroi de la partie 2 est déformable élastiquement dans le sens radial au moins au voisinage de son bord libre et son diamètre extérieur est tel que la partie 2 peut traverser le trou central du disque moyennant une légère déformation. Autour de cette partie de fixation 2, une partie annulaire surélevée 5 forme un appui pour le disque lorsque celui-ci est mis en place sur la partie de support. Dans cette position, la partie de fixation aura repris sa forme initiale de sorte que les bossages 3 et 3' retiennent le disque dans le sens axial sur la partie de support.

La Fig. 3 montre une variante de réalisation de la partie de support désignée ici par 1', selon laquelle la partie de fixation 23 s'étend de façon symétrique de part et d'autre de la partie de support, ce qui permet la fixation de deux disques sur une même partie de support. Une partie surélevée d'appui 5' est également formée de façon symétrique sur les deux faces de la partie de support 1'.

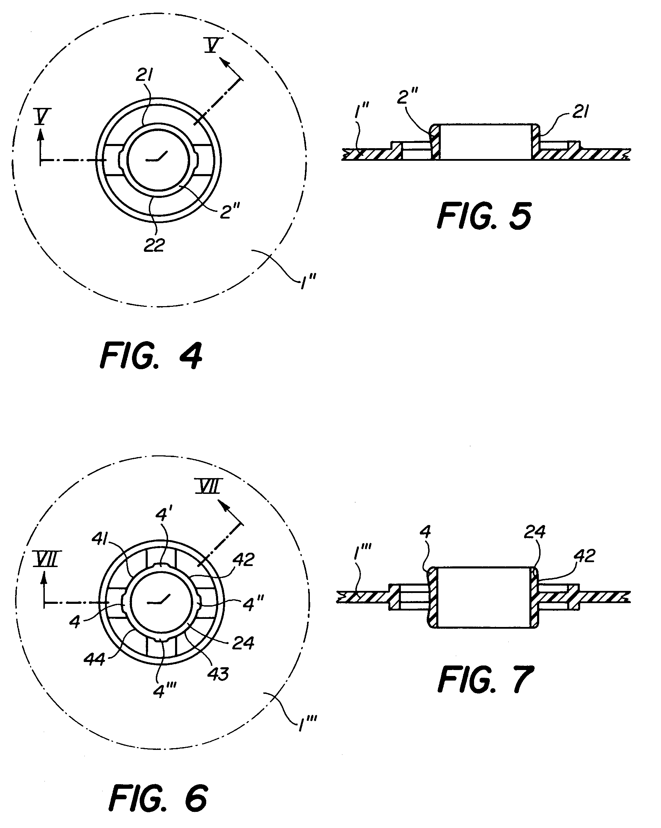

Les Figures 4 et 5 illustrent un autre exemple de réalisation dans lequel la partie de fixation 2'' n'est pas reliée à la partie de support 1'' sur l'ensemble de son pourtour, mais seulement le long de deux portions 21 et 22, de manière à laisser la paroi de la partie de fixation libre au voisinage des bossages. Ceci permet d'obtenir une plus grande élasticité à l'endroit de ces bossages.

Les Figures 6 et 7 illustrent encore une autre variante de réalisation, similaire à celle des Figures 4 et 5. Dans l'exemple montré à la Fig. 6, la partie de support 24 comporte quatre bossages 4, 4', 4'', 4''' répartis régulièrement sur le pourtour d'un bord libre de cette partie de fixation. Celle-ci est reliée à la partie de support 1''' le long de quatre portions de sa base désignées par 41, 42, 43, 44 situées respectivement entre deux bossages successifs. La Fig. 7 montre, en coupe, selon la ligne VII-VII de la Fig. 6, une exécution symétrique similaire à celle illustrée à la Fig. 3 permettant la fixation d'un disque de part et d'autre de la partie de support.

Bien entendu, les exemples susmentionnés ne visent qu'à illustrer le principe de l'invention qui peut être mis en oeuvre dans différentes variantes ou combinaisons des exemples mentionnés.

Dans toutes les configurations selon l'invention, la partie de support avec sa partie de fixation peut être réalisée en une pièce de matière plastique, par exemple par moulage à injection sans qu'il y ait un risque de défaut de moulage surtout au niveau de la partie sensible constituée par la partie de fixation. La forme de cette partie de fixation permet également de réaliser le moule correspondant de façon plus économique que dans le cas des formes complexes usuelles. L'invention permet ainsi de remédier efficacement aux défauts des supports de disque actuellement connus et utilisés.

## Revendications

1. Support pour disque d'enregistrement mince à trou central comportant, sur une partie de support essentiellement plane (1), une partie de fixation (2) agencée de façon à pouvoir traverser le trou central du disque et à assurer le maintien du disque sur le support, caractérisé en ce que ladite partie de fixation (2) a une forme annulaire d'un diamètre extérieur sensiblement égal ou légèrement inférieur à celui du trou central du disque, cette partie annulaire ayant une paroi essentiellement cylindrique dont au moins un bord libre est déformable élastiquement dans le sens radial, et présente au moins un bossage (3) orienté radialement vers l'extérieur de la paroi, ce bossage étant agencé de façon à maintenir le disque sur la partie de support de manière amovible, dans le sens axial, lorsque la partie de fixation, après avoir traversé le trou central du disque en subissant une déformation, a pratiquement repris sa forme originale.

2. Support selon la revendication 1, caractérisé en ce que ladite partie de fixation comporte deux (3, 3'), trois ou quatre (4, 4', 4'', 4''') bossages répartis sur le pourtour dudit bord libre.

3. Support selon la revendication 1 ou la revendication 2, caractérisé en ce que ladite paroi de la partie de fixation est reliée à la partie de support (1'', 1''') le long de portions limitées (21, 22; 41, 42, 43, 44) de son pourtour, de façon à laisser cette paroi libre au voisinage d'un bossage.

4. Support selon la revendication 1 ou la revendication 2, caractérisé en ce que la partie de fixation (23, 24) s'étend axialement de part et d'autre de la partie de support (1', 1''') de manière à permettre la fixation de deux disques, à savoir un disque de chaque côté de la partie de support.

5. Support selon l'une des revendications précédentes, caractérisé en ce que la partie de support (1) présente une partie surélevée (5) entourant ladite partie de fixation (2) et formant un appui pour le disque lorsque celui-ci est mis en place sur la partie de support.
